# EUROPÄISCHE PATENTSCHRIFT

(11) **EP 1 680 304 B1**
(45) Veröffentlichungstag und Bekanntmachung des Hinweises auf die Patenterteilung: **19.03.2008**
(21) Anmeldenummer: 04790795.1
(22) Anmeldetag: 23.10.2004
(51) Int. Cl.: B60N 2/56

(54) **BAUREIHE FÜR EINEN FAHRZEUGSITZ UND FAHRZEUGSITZ**
SERIES OF COMPONENTS FOR A VEHICLE SEAT AND VEHICLE SEAT
GAMME DE SIEGES DE VEHICULE ET SIEGE DE VEHICULE

(30) Priorität: 28.10.2003 DE 10350148
(43) Veröffentlichungstag der Anmeldung: 19.07.2006
(73) Patentinhaber: Daimler AG, 70327 Stuttgart (DE)
(72) Erfinder: MINUTH, Karl-Heinz, 71120 Grafenau (DE); PFAHLER, Karl, 70180 Stuttgart (DE)
(86) Internationale Anmeldenummer: PCT/EP2004/012004
(87) Internationale Veröffentlichungsnummer: WO 2005/042301

(56) Entgegenhaltungen:
- EP-A- 0 110 144
- EP-A- 1 329 356
- FR-A- 2 572 271
- US-A- 3 506 308
- US-A- 4 572 430
- US-A- 5 524 439
- US-A1- 2002 145 312
- US-B1- 6 291 803
- PATENT ABSTRACTS OF JAPAN Bd. 009, Nr. 202 (M-405), 20. August 1985 (1985-08-20) & JP 60 064017 A (NIHON HATSUJIYOU KK), 12. April 1985 (1985-04-12)

## Beschreibung

Die Erfindung betrifft eine Baureihe Fahrzeugsitzen eines Kraftfahrzeugs gemäß dem Oberbegriff des Anspruchs 1, und einem aktiv behüfteten Fahrzeugsitz gemäß dem Oberbegriff des Anspruchs 11.

Aus der zum Anmeldetag vorliegender Patentanmeldung noch nicht veröffentlichten Deutschen Patentanmeldung mit dem amtlichen Aktenzeichen 102 43 315.16 und dem Anmeldetag vom 18.09.2002 ist ein Polster mit einem Polsterkern und einer diesen überziehenden, luft- und feuchtedurchlässigen Deckschicht bekannt. Zur Verbesserung des Klimakomforts sind in der von der Deckschicht überdeckten Oberfläche des Polsterkerns voneinander beabstandete Längs- und Quernuten eingeformt, die zur Deckschicht hin offen sind und sich gegenseitig kreuzen. Die beschriebenen Längs- und Quernuten sind dabei als Belüftungskanäle ausgebildet. Zusätzlich sind in dem Polsterkern dessen volle Kerndicke durchdringende Lüftungsschächte vorgesehen, die einerseits in den Kreuzungspunkten von Längs- und Quernuten und andererseits frei an der Außenseite des Polsterkerns münden. Ein solches Polster ist auch aus US-A-5,524,439 bekannt, die als nachstliegendes Stand des Technik angesehen wird. Zusätzlich kann in DE 102 93 315,16 ein Gebläse zur Beaufschlagung eines zentralen Polsterbereiches mit Luft entweder auf der von der Deckschicht abgekehrten Seite des Polsterkerns und mit Abstand von diesem oder in einem den Polsterkern vollständig durchdringenden Schacht angeordnet sein. Die dadurch erreichte intensive Luftströmung in den Längs- und Quernuten ermöglicht ein schnelles Abführen von Wärme und Feuchtigkeit.

Aus der DE 200 02 447 U1 ist ein Sitzpolster für Fahrzeugsitze, insbesondere für Fahrzeugsitze mit einem Kernteil aus einem Kunststoffschaum bekannt. Das Kernteil weist auf seiner oberen, einer Sitzfläche zugekehrten Seite kanalartige Vertiefungen auf, welche zonale Schwächungen bewirken und dadurch die Sitzfläche entsprechend der erforderlichen Druckverhältnisse gestalten. Des Weiteren ist vorgesehen, in den kanalartigen Vertiefungen zumindest teilweise eine Luftzirkulation zu ermöglichen. Durch eine Bewegung des Sitzbenutzers auf dem Sitzpolster während der Fahrt entsteht in dem kanalartigen System des Kernteils eine durch eine Art Pumpwirkung erzeugte Luftströmung, welche die feuchte Luft durch vertikale Öffnung im Schaumpolsterteil nach außen transportiert. Um die Belüftungswirkung des Fahrzeugsitzes zu verstärken, kann zusätzlich im Bereich einer unteren Mündungsöffnung eines Hauptkanals, welcher die kanalartigen Vertiefungen mit einer der Sitzfläche gegenüberliegenden Unterseite verbindet, ein Lüfter angeordnet sein. Im Unterschied zu einem passiv belüfteten Fahrzeugsitz weist der aktiv belüftete Fahrzeugsitz den beschriebenen Hauptkanal mit dem darin angeordneten Lüfter auf. Dementsprechend ist ein passiv belüfteter Fahrzeugsitz konstruktiv anders aufgebaut als ein aktiv belüfteter Fahrzeugsitz.

Aus der DE 33 06 871 A1 ist ein Polster mit einer luftdurchlässigen Deckschicht bekannt. Bei dem Polster wird durch Kanäle beziehungsweise flexible auf dem oder im Kern verlaufende Rohre mit luftdurchlässigen Wänden ein verstärkter Luftaustausch in den Bereichen, auf denen man sitzt, lehnt oder liegt, erreicht, was einen zu großen Temperaturanstieg der Polsteroberfläche verhindert. Das Polster weist Lüftungskanäle auf, die im Sitz- und/oder Lehn- und/oder Liegebereich unter der Deckschicht verlaufen und die über quer dazu angeordnete Lüftungsschächte verbunden sein können, welche wiederum an eine Luftabsaugung angeschlossen sind. Gemäß der Ausführungsvariante mit den vertikalen Lüftungsschächten ist vorgesehen, diese entweder alle an einer Außenseite einer Sitzschale frei münden zu lassen oder aber alle Lüftungsschächte an einem Inneren der Sitzschale frei münden zu lassen und die Luft aus dem Inneren der Sitzschale über einen Hauptverbindungsschlauch abzusaugen.

Die vorliegende Erfindung beschäftigt sich mit dem Problem, für eine Baureihe für einen Fahrzeugsitz eingangs erwähnter Art eine verbesserte Ausführungsform anzugeben, bei welcher insbesondere ein Fertigungsprozess vereinfacht und/oder rationeller gestaltet ist.

Diese Aufgabe wird durch die Gegenstände der unabhängigen Ansprüche gelöst, vorteilhafte Ausgestaltungen sind Gegenstand der abhängigen Ansprüche.

Die Erfindung beruht auf dem allgemeinen Gedanken, bei einer Baureihe für einen Fahrzeugsitz, welcher einen Polsterkern mit entlang und innenseitig einer Sitz- und/oder Lehnenfläche verlaufenden Lüftungskanälen sowie mit im wesentlichen quer dazu angeordneten Lüftungsschächten aufweist, zur Realisierung eines entweder aktiv oder passiv belüfteten Fahrzeugsitzes lediglich einen Polsterkern vorzusehen, welcher an jeweilige Anforderungen eines aktiv oder eines passiv belüfteten Fahrzeugsitzes angepasst werden kann. Die Lüftungskanäle kommunizieren dabei mit den im wesentlichen quer dazu angeordneten Lüftungsschächten, welche den Polsterkern in dessen gesamter Dicke durchdringen und sich von den Lüftungskanälen bis an eine der Sitz- und/oder Lehnenfläche abgekehrte Rückwand erstrecken.

Erfindungsgemäß sind dabei die Lüftungsschächte zur Realisierung eines passiv belüfteten Fahrzeugsitzes strömungsdurchlässig über eine Öffnung in der Rückwand, beispielsweise einer Sitzschale, mit der Umgebung verbunden, wogegen zur Realisierung eines aktiv belüfteten Fahrzeugsitzes mindestens ein Gebläse, beispielsweise in Form eines Ventilators oder eines Miniaturlüfters, vorgesehen ist und wobei zumindest einer der Lüftungsschächte verschlossen ist.

Durch die erfindungsgemäße Lösung wird also ein Polsterkern geschaffen, der sowohl für eine aktive Fahrzeugsitzbelüftung unter Verwendung von Lüftern, als auch für eine passive Fahrzeugsitzbelüftung einsetzbar ist. Bei der passiven Fahrzeugsitzbelüftung werden die im wesentlichen horizontal verlaufenden Lüftungskanäle an der Oberseite des Polsterkern durch die Vielzahl von Lüftungsschächten, welche über eine Öffnung in der Rückwand mit der Umgebung strömungsverbunden sind, mit Luft versorgt. Beim aktiv belüfteten Fahrzeugsitz ist zusätzlich ein Gebläse vorgesehen, welches beispielsweise innerhalb eines Lüftungsschachtes oder im Bereich einer Mündung des Lüftungsschachtes, das heißt im Bereich der Öffnung in der Rückwand des Fahrzeugsitzes, angeordnet ist und den zugehörigen Lüftungsschacht mitLuft versorgt. Dabei sind einige der Lüftungsschächte verschlossen ausgebildet, so dass sich eine Zirkulation der durch die Lüfter eingeblasene beziehungsweise abgesaugte Luft ergibt. Der beschriebene Lüfter kann dabei strömungsrichtungsumkehrbar ausgebildet sein.

Die erfindungsgemäße Lösung bietet daher den großen Vorteil, sowohl für einen passiv belüfteten Fahrzeugsitz als auch für einen aktiv belüfteten Fahrzeugsitz einen gleichen Polstergrundkern vorzuhalten, welcher in einem weiteren Bearbeitungsgang auf die jeweiligen Anforderungen der aktiven beziehungsweise passiven Fahrzeugsitzbelüftung angepasst wird. Dadurch reduziert sich die Anzahl der vorzuhaltenden Bauteile, wodurch Kosten eingespart werden können und der Fertigungsprozess vereinfacht wird.

Gemäß einer bevorzugten Ausführungsform der Erfindung weist jeder Polsterkern an seiner Rückwand eine strömungsundurchlässige Schicht auf, welche zur Realisierung des passiv belüfteten Fahrzeugsitzes im Mündungsbereich zumindest eines Lüftungsschachtes durchstoßen oder entfernt wird. Bei dieser Ausführungsvariante ist demnach ein Polsterkern vorgesehen, welcher in seiner Grundausführung der des aktiv belüfteten Fahrzeugsitzes entspricht und bei welchem zur Anpassung an einen aktiv belüfteten Fahrzeugsitz lediglich Öffnungen im Mündungsbereich zumindest eines Lüftungsschachtes geschaffen werden müssen. Das Schaffen dieser Öffnungen kann beispielsweise durch ein einfaches Durchstoßen beziehungsweise Durchbohren der strömungsundurchlässigen Schicht erreicht werden oder aber auch durch ein Entfernen der störmungsundurchlässigen Schicht in dem genannten Bereich.

Gemäß einer alternativen Ausführungsform der erfindungsgemäßen Lösung weist jeder Polsterkern an seiner Rückwand jeweils im Mündungsbereich der Lüftungsschächte eine Öffnung auf, wovon zur Realisierung des aktiv belüfteten Fahrzeugsitzes zumindest eine geschlossen wird. Hierbei ist also vorgesehen, einen Polstergrundkern zu schaffen, welcher ohne Nachbearbeitung für einen passiv belüfteten Fahrzeugsitz geeignet ist. Für den aktiv belüfteten Fahrzeugsitz muss zumindest eine der rückwandseitigen Öffnungen der Lüftungsschächte geschlossen werden, was beispielsweise durch ein einfaches Überkleben der Öffnungen mit einer Folie und/oder ein Einbringen eines Stopfens in den Lüftungsschacht erreicht werden kann.

Gemäß einer vorteilhaften Weiterbildung der erfindungsgemäßen Lösung kann die strömungsundurchlässige Schicht als Kunststoff und/oder als Filzschicht ausgebildet sein. Kunststoffschichten sowie Filzschichten lassen sich kostengünstig und in nahezu beliebiger Ausführungsform herstellen und einfach verarbeiten. Während eine Kunststoffschicht nahezu gänzlich strömungsundurchlässig ausgebildet ist, kann bei der Filzschicht je nach Ausführungsform auch eine sehr geringe Strömungsdurchlässigkeit vorgegeben werden.

Gemäß einer besonders bevorzugten Ausführungsform der Erfindung ist die Kunststoffschicht als Folie ausgebildet. Eine derartige Folie, vorzugsweise eine selbstklebende Folie, kann einfach, schnell und kostengünstig auf die Rückwand des Fahrzeugsitzes aufgebracht werden und dadurch die Öffnungen der Lüftungsschächte zuverlässig verschließen. Gleichzeitig ist aber auch ein nachträgliches Entfernen bzw. Durchstoßen der Folie zum Öffnen der Lüftungsschächte einfach und problemlos möglich.

Entsprechend einer vorteilhaften Weiterbildung der Erfindung ist eine Anordnung der Lüftungskanäle und/oder Lüftungsschächte an eine Körperdruckverteilung und/oder an Körperkontaktstellen angepasst. Diese Ausführungsform bewirkt eine optimale Anpassung der Lüftungsleistung an eine menschliche Anatomie bzw. an eine Anatomie eines Standardfahrzeuginsassens. Hierbei können beispielsweise stärker belastete Bereiche des Fahrzeugsitzes, beispielsweise im Bereich eines menschlichen Sitzbeinhöckers besser belüftet werden und dadurch das Wohlbefinden des Sitzbenutzers positiv beeinflussen.

Zweckmäßig kann ein steuerbarer Lüftungsschachtverschluss vorgesehen sein, der mit dem Gebläse zusammenwirkt und entweder eine aktive oder eine passive Belüftung des Fahrzeugsitzes ermöglicht. Ein derartiger steuerbarer Lüftungsschachtverschluss ermöglicht die Realisierung eines Fahrzeugsitzes der sowohl passiv als auch aktiv belüftbar ist. Für eine passive Fahrzeugsitzbelüftung wird das Gebläse abgeschaltet und gleichzeitig zumindest ein Teil der Öffnungen der Lüftungsschächte geöffnet, wogegen für eine aktive Fahrzeugsitzbelüftung das Gebläse eingeschaltet wird und zumindest ein Teil der Lüftungsschächte verschlossen wird. Dabei ist denkbar, dass z.B. am Armaturenbrett oder am Sitz ein Wahlschalter zwischen aktiver und passiver Sitzbelüftung angeordnet ist, welcher sowohl das Öffnen bzw. das Schließen der Lüftungsschächte, als auch das Aus- bzw. Einschalten des Gebläses schaltet. Das Öffnen bzw. Schließen der Lüftungsschächte kann dabei über einen einfachen Schieber, beispielsweise ein bezüglich der Öffnungen versetzt gelochtes Kunststoffteil, erfolgen. Eine derartige Wahlmöglichkeit zwischen aktiver und passiver Fahrzeugsitzbelüftung steigert den Fahrkomfort sowie die Funktionalität des Fahrzeugsitzes.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in den nachfolgenden Beschreibungen näher erläutert, wobei sich gleiche Bezugszeichen auf gleiche oder ähnliche oder funktional gleiche Bauteile beziehen.

Dabei zeigen:
- Fig. 1: eine Draufsicht auf eine Sitzfläche eines Fahrzeugsitzes mit Lüftungskanälen,
- Fig. 2: einen Querschnitt durch eine Sitzfläche eines erfindungsgemäßen Polsterkerns mit passiver Sitzbelüftung,
- Fig. 3: einen Querschnitt wie in Fig. 2, jedoch mit aktiver Sitzbelüftung.

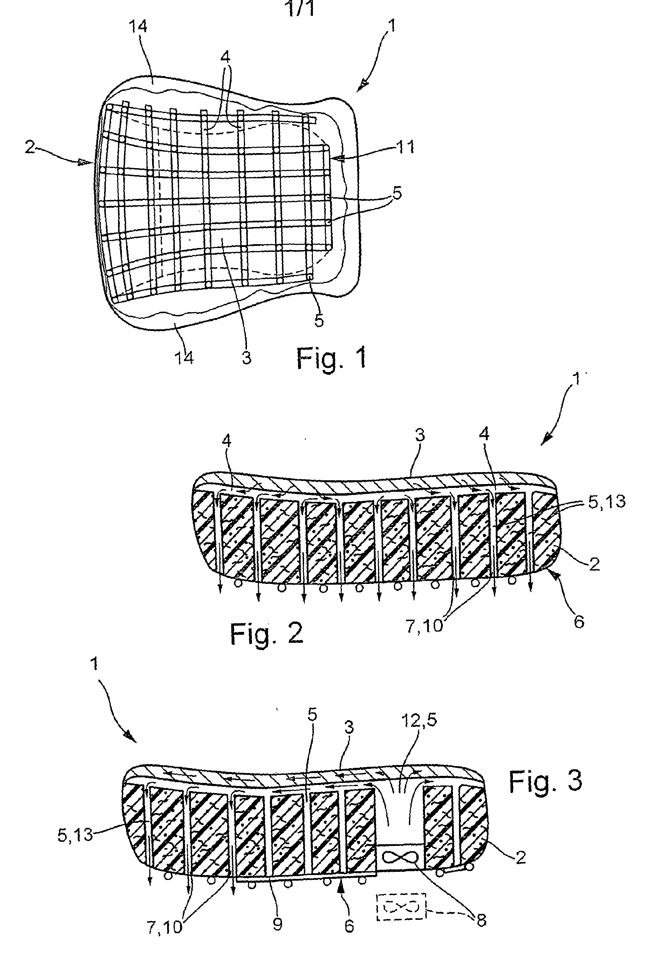

Ein Fahrzeugsitz 1 weist in bekannter Weise ein Sitzteil und eine Rückenlehne auf, wobei in den dargestellten Fig. 1 bis 3 lediglich das Sitzteil des Fahrzeugsitzes 1 dargestellt ist. Der im folgenden beschriebene Aufbau sowie die Funktionsweise gelten jedoch in gleicher Weise für das Lehnenteil des Fahrzeugsitzes 1.

Entsprechend Fig. 1 weist das Sitzteil des Fahrzeugsitzes 1 eine obere Sitzfläche 3 auf, welche in einer sitzergonomischen Weise reliefiert sein kann, sowie einen Polsterkern 2, der beispielsweise aus einem elastischen Kunststoff ausgebildet sein kann.

Erfindungsgemäß besitzt der Polsterkern 2 auf seiner oberen, der Sitzfläche 3 zugekehrten Seite Lüftungskanäle 4, welche entlang und innenseitig der Sitzfläche 3 verlaufen. Die verschiedenen Lüftungskanäle 4 können dabei regelmäßig angeordnet sein und ein sogenanntes Kanalgitter 11 bilden. Denkbar ist aber auch ein an eine Körperdruckverteilung und/oder an Körperkontaktstellen angepasste Anordnung der Lüftungskanäle 4.

Entsprechend Fig. 1 verlaufen die Lüftungskanäle 4 im wesentlichen im Bereich der Sitzfläche 3, sie können jedoch aber auch über einen Wangenbereich 14 des Kraftfahrzeuges 1 geführt werden.

Quer zu den Lüftungskanälen 4 sind Lüftungsschächte 5 angeordnet (vgl. Fig. 2 und 3), die den Polsterkern 2 in dessen gesamter Dicke durchdringen und sich von den Lüftungskanälen 4 bis an eine der Sitzfläche 3 abgekehrte Rückwand 6 erstrecken. Sowohl die Lüftungskanäle 4 als auch die Lüftungsschächte 5 können beim Schäumen des Polsterkerns 2 direkt mit eingeformt werden.

Das räumliche Netzwerk, gebildet aus einem Kanalgitter 11 aus Lüftungskanälen 4 sowie damit kommunizierenden Lüftungsschächten 5, sorgt für einen wirksamen Feuchtetransport der von einem Fahrzeuginsassen produzierten Schwitzfeuchte im wesentlichen von der Sitzfläche 3 weg, hin zur Rückwand 6 des Polsterkerns 2.

Gemäß Fig. 1 münden dabei die Lüftungsschächte 5 in Kreuzungspunkten 15 der Lüftungskanäle 4 bzw. des Kanalgitters 11.

Erfindungsgemäß ist nun vorgesehen, die Lüftungsschächte 5 zur Realisierung eines passiv belüfteten Fahrzeugsitzes 1 strömungsdurchlässig über eine Öffnung 7 in der Rückwand 6 mit der Umgebung zu verbinden. Durch eine ständige Bewegung des Sitzbenutzers auf der Sitzfläche 3 während der Fahrt entsteht in dem kanalartigen System der Lüftungskanäle 4 und der Lüftungsschächte 5 eine durch eine Pumpwirkung erzeugte Luftströmung, welche die feuchte Luft durch die Öffnungen 7 in die Umgebung transportiert. Für den in Fig. 2 dargestellten passiv belüfteten Fahrzeugsitz 1 ist vorteilhafter Weise kein zusätzlicher Ventilator 8 erforderlich.

Zur Realisierung eines aktiv belüftet Fahrzeugsitzes 1 gemäß Fig. 3 hingegen ist ein Ventilator bzw. ein Gebläse 8 vorgesehen und gleichzeitig zumindest einer der Lüftungsschächte 5 verschlossen. Das Verschließen der Lüftungsschächte 5 kann dabei durch eine strömungsundurchlässige Schicht 9 erfolgen, welche an der Rückwand 6 angeordnet ist oder aber durch Stopfen, die in die jeweiligen einen Lüftungsschächte 5 eingeführt werden. Das Gebläse 8 für den aktiv belüfteten Fahrzeugsitz 1 gemäß Fig. 3 kann dabei entweder innerhalb des Polsterkerns 2, d.h. innerhalb eines entsprechend geformten Lüftungsschachts 5 angeordnet sein oder aber außerhalb des Polsterkerns 2 und beabstandet von der Rückwand 6. Denkbar sind hier auch mehrere nicht dargestellte Miniaturlüfter, welche in verschiedenen Lüftungsschächten 5 angeordnet sind. Das Gebläse 8 kann des weiteren sowohl eine Saug- als auch eine Druckwirkung innerhalb des Kanalsystems erzeugen.

Erfindungswesentlich ist, dass der Polsterkern 2 sowohl für den aktiv belüfteten als auch für den passiv belüfteten Fahrzeugsitz 1 gleich ausgebildet ist und lediglich nachträglich an jeweilige Anforderungen bezüglich des aktiv bzw. passiv belüfteten Fahrzeugsitzes 1 angepasst werden muss. Dies trägt wesentlich zur Reduzierung der Teilevielfalt und damit zu einer Senkung der Kosten bei.

Im folgenden sollen zwei beispielhafte Möglichkeiten zur Anpassung des Polsterkerns 2 an einen aktiv belüfteten bzw. einen passiv belüfteten Fahrzeugsitz 1 erläutert werden:

Entsprechend einer ersten Variante ist vorgesehen, dass jeder Polsterkern 2 an seiner Rückwand 6 eine strömungsundurchlässige Schicht 9 aufweist, welche zur Realisierung des passiv belüfteten Fahrzeugsitzes 1 im Mündungsbereich 10 zumindest eines Lüftungsschachtes 5 durchstoßen oder entfernt wird. Hierbei ist also vorgesehen, einen stets gleichen Polsterkern 2 herzustellen, bei welchem die Mündungsbereiche 10 der Lüftungsschächte 5 durch die strömungsundurchlässige Schicht 9 werkseitig verschlossen sind. Wird bei einer Sonderausstattung ein aktiv belüfteter Fahrzeugsitz 1 gewünscht, so werden nachträglich Öffnungen 7 im Mündungsbereich 10 der Lüftungsschächte 5 durch die strömungsundurchlässige Schicht 9 gebohrt und/oder gestoßen. Denkbar ist auch, dass die strömungsundruchlässige Schicht 9 im Bereich der Öffnungen 7 vorgestanzte Bereiche aufweist, welche sich besonders einfach entfernen lassen, oder dass die komplette Schicht 9 nach Art einer Abziehfolie einfach entfernbar bzw. abziehbar ist.

Gemäß einer zweiten Ausführungsvariante weist jeder Polsterkern 2 an seiner Rückwand 6 jeweils im Mündungsbereich 10 der Lüftungsschächte 5 eine Öffnung 7 auf, wobei zur Realisierung des aktiv belüfteten Fahrzeugsitzes 1 zumindest eine der Öffnungen 7 geschlossen wird. Hierbei wird also ein stets gleicher Polsterkern 2 hergestellt, welcher ohne Änderungen in einen passiv belüften Fahrzeugsitz 1 eingebaut werden kann. Wird als Sonderausstattung ein aktiv belüfteter Fahrzeugsitz 1 gewünscht, so muss zumindest eine Öffnung 7, beispielsweise durch einen Stopfen oder durch Verkleben oder Zukleben mit einer Folie oder Schicht 9, verschlossen werden. Desweiteren benötigt der aktiv belüftete Fahrzeugsitz 1 zusätzlich das oben beschriebene Gebläse 8.

Als strömungsundurchlässige Schicht 9 kommen beispielsweise eine Kunststoff- und/oder eine Filzschicht in Frage, wobei die Kunststoffschicht beispielsweise als Folie ausgebildet sein kann. Insbesondere eine selbstklebende Folie bietet den großen Vorteil, dass diese einfach und schnell auf die Rückwand 6 aufgebracht werden kann.

Gemäß Fig. 3 ist beim aktiv belüfteten Fahrzeugsitz 1 wenigstens ein Einströmschacht 12 vorgesehen, durch welchen Umgebungsluft in den Fahrzeugsitz 1 gelangt sowie wenigstens ein Ausströmschacht 13, durch welchen Luft aus dem Fahrzeugsitz 1 in die Umgebung gelangt. Die Definition des Einströmschachtes 12 bzw. des Ausströmschachtes 13 orientiert sich dabei an einer Strömungsrichtung des Gebläses 8. Generell ist vorgesehen zwischen dem Einströmschacht 12 und dem Ausströmschacht 13 verschlossene Lüftungsschächte 5 anzuordnen, so dass ein verbesserter Kreislauf der strömenden Luft, d.h. eine verbesserte Zirkulation, innerhalb des Polsterkerns 2 erreicht wird.

Für höherwertige Ausstattungslinien kann zu dem ein steuerbarer, nicht dargestellter, Lüftungsschachtverschluss vorgesehen, der mit dem Gebläse 8 zusammenwirkt und entweder eine aktive oder eine passive Belüftung des Fahrzeugsitzes 1 ermöglicht. Bei einer passiven Belüftung des Fahrzeugsitzes 1 ist dabei das Gebläse 8 abgeschaltet und zumindest ein Großteil der Öffnungen 7 im Mündungsbereich 10 der Lüftungsschächte 5 geöffnet. Für eine aktive Belüftung des Fahrzeugsitzes 1 wird das Gebläse 8 eingeschaltet und gleichzeitig zumindest ein Teil der Öffnungen 7 der Lüftungsschächte 5 verschlossen. Das Verschließen bzw. Öffnen der Lüftungsschächte 5 kann dabei beispielsweise durch ein versetzt zu den Öffnungen 7 angeordnetes Lochgitter erfolgen. Desweiteren ist hierbei sowohl eine manuelle als auch eine automatische

Umschaltung zwischen aktiver und passiver Sitzbelüftung, beispielsweise durch ein Schaltelement am Sitz oder am Armaturenbrett, denkbar.

Zusammenfassend lassen sich die wesentlichen Merkmale der erfindungsgemäßen Lösung wie folgt charakterisieren:

Die Erfindung sieht vor, bei einer Baureihe für einen Fahrzeugsitz 1 eines Kraftfahrzeugs sowohl für eine passive Belüftung als auch für eine aktive Belüftung ein gleichen Polsterkern 2 vorzusehen, welcher Lüftungskanäle 4 und quer dazu angeordnete Lüftungsschächte 5 aufweist, welche den Polsterkern 2 in dessen gesamter Dicke durchdringen und sich von den Lüftungskanälen 4 bis an eine von der Sitzfläche 3 abgekehrte Rückwand 6 erstrecken. Zur Realisierung eines passiv belüfteten Fahrzeugsitzes 1 sind dabei die Lüftungsschächte 5 strömungsdurchlässig mit der Umgebung verbunden, wogegen bei einem aktiv belüfteten Fahrzeugsitz 1 zusätzlich ein Gebläse 8 vorgesehen ist und zumindest einer der Lüftungsschächte 5 verschlossen ist.

Die erfindungsgemäße Lösung bietet somit den großen Vorteil, dass sowohl für den aktiv als auch für den passiv belüfteten Fahrzeugsitz 1 lediglich ein identischer Polsterkern 2 vorgesehen ist, welcher einfach an die jeweiligen Anforderungen einer passiven bzw. aktiven Belüftung des Fahrzeugsitzes 1 anpassbar ist.

## Patentansprüche

1. Baureihe von Fahrzeugsitzen (1) eines Kraftfahrzeugs, wobei jeder Fahrzeugsitz (1) einen Polsterkern (2) aufweist,
- mit entlang und innenseitig einer Sitz- (3) und/oder Lehnenfläche verlaufenden Lüftungskanälen (4) und
- mit im wesentlichen quer zu den Lüftungskanälen (4) angeordneten Lüftungsschächten (5), die den Polsterkern (2) in dessen gesamter Dicke durchdringen und sich von den Lüftungskanälen (4) bis an eine der Sitz- (3) und/oder Lehnenfläche abgekehrte Rückwand (6) erstrecken,
**dadurch gekennzeichnet,**
**dass** die Lüftungsschächte (5) zur Realisierung eines passiv belüfteten Fahrzeugsitzes (1) strömungsdurchlässig über eine Öffnung (7) in der Rückwand (6) mit der Umgebung verbunden sind, wogegen zur Realisierung eines aktiv belüfteten Fahrzeugsitzes (1) mindestens ein Gebläse (8) vorgesehen ist und zumindest ein Lüftungsschacht (5) verschlossen ist.

2. Baureihe nach Anspruch 1,
**dadurch gekennzeichnet,**
**dass** jeder Polsterkern (2) an seiner Rückwand (6) eine strömungsundurchlässige Schicht (9) aufweist, welche zur Realisierung des passiv belüfteten Fahrzeugsitzes (1) im Mündungsbereich (10) zumindest eines Lüftungsschachtes (5) durchstoßen oder entfernt wird.

3. Baureihe nach Anspruch 1,
**dadurch gekennzeichnet,**
**dass** jeder Polsterkern (2) an seiner Rückwand (6) jeweils im Mündungsbereich (10) der Lüftungsschächte (5) eine Öffnung (7) aufweist, wovon zur Realisierung des aktiv belüfteten Fahrzeugsitzes (1) zumindest eine geschlossen wird.

4. Baureihe nach Anspruch 2,
**dadurch gekennzeichnet,**
**dass** die strömungsundurchlässige Schicht (9) als Kunststoff- und/oder Filzschicht ausgebildet ist.

5. Baureihe nach Anspruch 4,
**dadurch gekennzeichnet,**
**dass** die Kunststoffschicht als Folie ausgebildet ist.

6. Baureihe nach einem der Ansprüche 1 bis 5,
**dadurch gekennzeichnet,**
**dass** die Lüftungskanäle (4) als Kanalgitter (11) ausgebildet sind und sich strömungsverbunden kreuzen.

7. Baureihe nach einem der Ansprüche 1 bis 6,
**dadurch gekennzeichnet,**
**dass** eine Anordnung der Lüftungskanäle (4) und/oder - schächte (5) an eine Körperdruckverteilung und/oder an Körperkontaktstellen angepasst ist.

8. Baureihe nach einem der Ansprüche 1 bis 7,
**dadurch gekennzeichnet,**
**dass** die Lüftungskanäle (4) und/oder -schächte (5) im wesentlichen regelmäßig angeordnet sind.

9. Baureihe nach einem der Ansprüche 1 bis 8,
**dadurch gekennzeichnet,**
- **dass** beim aktiv belüfteten Fahrzeugsitz (1) wenigstens ein Einströmschacht (12) vorgesehen ist, durch welchen Umgebungsluft in den Fahrzeugsitz (1) gelangt und
- wenigstens ein Ausströmschacht (13, durch welchen Luft aus dem Fahrzeugsitz (1) in die Umgebung gelangt,
- **dass** zwischen dem Einströmschacht (12) und dem Ausströmschacht (13) verschlossene Lüftungsschächte (5) angeordnet sind.

10. Baureihe nach einem der Ansprüche 1 bis 9,
**dadurch gekennzeichnet,**
**dass** ein steuerbarer Lüftungsschachtverschluss vorgesehen ist, der mit dem Gebläse (8) zusammenwirkt und entweder eine aktive oder eine passive Belüftung des Fahrzeugsitzes (1) ermöglicht.

11. Aktiv belüfteter Fahrzeugsitz (1) eines Kraftfahrzeugs, wobei jeder Fahrzeugsitz (1) einen Polsterkern (2) aufweist,
- mit entlang und innenseitig einer Sitz-(3) und/oder Lehnenfläche verlaufenden Lüftungskanälen (4) und
- mit im wesentlichen quer zu den Lüftungskanälen (4) angeordneten Lüftungsschächten (5), die den Polsterkern (2) in dessen gesamter Dicke durchdringen und sich von den Lüftungskanälen (4) bis an eine der Sitz-(3) und/oder Lehnenfläche abgekehrte Rückwand (6) erstrecken,
- mit mindestens einem Gebläse (8),
**dadurch gekennzeichnet,**
**dass** zur Realisierung eines aktiv belüfteten Fahrzeugsitzes zumindest (1) ein Lüftungsschacht (5) verschlossen ist.

12. Aktiv belüfteter Fahrzeugsitz nach Anspruch 11, **gekennzeichnet durch** wenigstens eines der kennzeichnenden Merkmale der Ansprüche 1 bis 10.

## Claims

1. Range of vehicle seat (1) models for a motor vehicle, each vehicle seat (1) having a cushion core (2),
- with ventilation channels (4) that extend along and inside a seat surface (3) and/or a backrest surface, and
- with ventilation ducts (5) arranged essentially transversely to the ventilation channels (4), which pass through the entire thickness of the cushion core (2) and extend from the air channels (4) to a rear wall (6) that faces away from the seat surface (3) and/or the backrest surface,
**characterised in that**
to create a passively ventilated vehicle seat (1) the ventilation ducts (5) are connected with the surroundings via a flow-permeable opening (7) in the rear wall (6), whereas to create an actively ventilated seat (1) at least one fan (8) is provided and at least one ventilation duct (5) is closed.

2. Seat range according to Claim 1,
**characterised in that**
over its rear wall (6) each cushion core (2) has a flow-permeable layer (9) which, to create the passively ventilated seat (1), is pierced or removed in the opening area (10) of at least one ventilation duct (5).

3. Seat range according to Claim 1,
**characterised in that**
on its rear wall (6) each cushion core (2) has a respective opening (7) in the opening area (10) of the ventilation ducts (5), and to create the actively ventilated vehicle seat (1) at least one of these openings is closed.

4. Seat range according to Claim 2,
**characterised in that**
the flow-permeable layer (9) is made as a plastic and/or felt layer.

5. Seat range according to Claim 4,
**characterised in that**
the plastic layer is made as a foil.

6. Seat range according to any of Claims 1 to 5,
**characterised in that**
the ventilation channels (4) form a lattice of channels (11) which cross one another in flow connection.

7. Seat range according to any of Claims 1 to 6,
**characterised in that**
an arrangement of the ventilation channels (4) and/or the ducts (5) is adapted to a distribution of body pressure and/or body contact points.

8. Seat range according to any of Claims 1 to 7,
**characterised in that**
the ventilation channels (4) and/or ducts (5) are arranged essentially in a regular pattern.

9. Seat range according to any of Claims 1 to 8,
**characterised in that**
- in the actively ventilated vehicle seat (1) at least one inflow duct (12) is provided, through which air from the surroundings passes into the vehicle seat (1), and
- at least one outflow duct (13), is provided, through which air passes out of the vehicle seat (1) to the surroundings, and
- between the said inflow duct (12) and the said outflow duct (13) are arranged closed ventilation ducts (5).

10. Seat range according to any of Claims 1 to 9,
**characterised in that**
a controllable air duct closure is provided, which co-operates with the fan (8) and enables either active or passive ventilation of the vehicle seat (1).

11. Actively ventilated vehicle seat (1) of a motor vehicle, each vehicle seat (1) having a cushion core (2),
- with ventilation channels (4) that extend along and inside a seat surface (3) and/or a backrest surface,
- with ventilation ducts (5) arranged essentially transversely to the ventilation channels (4), which pass through the entire thickness of the cushion core (2) and extend from the air channels (4) to a rear wall (6) that faces away from the seat surface (3) and/or the backrest surface, and
- with at least one fan (8),
**characterised in that**
to create an actively ventilated vehicle seat (1) at least one ventilation duct (5) is closed.

12. Actively ventilated vehicle seat (1) according to Claim 11,
**characterised by** at least one of the characterising features of Claims 1 to 10.

## Revendications

1. Gamme de sièges de véhicule (1) d'un véhicule automobile, chaque siège de véhicule (1) présentant une âme de rembourrage (2),
◆ avec des canaux d'aération (4) s'étendant le long et sur le côté intérieur d'une surface du siège (3) et/ou du dossier et
◆ avec des cheminées d'aération (5) disposées essentiellement de manière transversale par rapport aux canaux d'aération (4), lesquelles traversent l'âme de rembourrage (2) sur l'ensemble de son épaisseur et s'étendent depuis les canaux d'aération (4) jusqu'à une paroi arrière (6) éloignée de la surface du siège (3) et/ou du dossier,
**caractérisée en ce que**, pour la réalisation d'un siège de véhicule (1) aéré de façon passive, les cheminées d'aération (5) sont reliées à l'environnement de manière perméable au flux par le biais d'une ouverture (7) dans la paroi arrière (6), tandis que, pour la réalisation d'un siège de véhicule (1) aéré de façon active, au moins un ventilateur (8) est prévu et au moins une cheminée d'aération (5) est fermée.

2. Gamme selon la revendication 1, **caractérisée en ce que**, au niveau de sa paroi arrière (6), chaque âme de rembourrage (2) présente une couche imperméable au flux (9), qui, pour la réalisation du siège de véhicule (1) aéré de façon passive, est transpercée ou enlevée dans la zone d'embouchure (10) d'au moins une cheminée d'aération (5).

3. Gamme selon la revendication 1, **caractérisée en ce que**, au niveau de sa paroi arrière (6), chaque âme de rembourrage (2) présente respectivement dans la zone d'embouchure (10) des cheminées d'aération (5) une ouverture (7), parmi lesquelles ouvertures au moins une est fermée pour la réalisation du siège de véhicule (1) aéré de façon active.

4. Gamme selon la revendication 2, **caractérisée en ce que** la couche imperméable au flux (9) est réalisée comme une couche de matière plastique et/ou de feutre.

5. Gamme selon la revendication 4, **caractérisée en ce que** la couche de matière plastique est réalisée comme un film.

6. Gamme selon l'une quelconque des revendications 1 à 5, **caractérisée en ce que** les canaux d'aération (4) sont réalisés comme un grillage de canaux (11) et se croisent par liaison fluidique.

7. Gamme selon l'une quelconque des revendications 1 à 6, **caractérisée en ce qu'**une disposition des canaux (4) et/ou des cheminées (5) d'aération est adaptée à une répartition de la pression du corps et/ou à des points de contact du corps.

8. Gamme selon l'une quelconque des revendications 1 à 7, **caractérisée en ce que** les canaux (4) et/ou les cheminées (5) d'aération sont disposés essentiellement de manière régulière.

9. Gamme selon l'une quelconque des revendications 1 à 8, **caractérisée en ce que**
◆ dans le cas du siège de véhicule (1) aéré de façon active, est prévue au moins une cheminée d'admission (12), au travers de laquelle l'air environnant arrive dans le siège de véhicule (1) et
◆ au moins une cheminée d'échappement (13), au travers de laquelle l'air provenant du siège de véhicule (1) arrive dans l'environnement,
◆ entre la cheminée d'admission (12) et la cheminée d'échappement (13), sont disposées des cheminées d'aération (5) fermées.

10. Gamme selon l'une quelconque des revendications 1 à 9, **caractérisée en ce qu'**un obturateur de cheminée d'aération pouvant être commandé est prévu, lequel coopère avec le ventilateur (8) et permet une aération du siège de véhicule (1) active ou passive.

11. Siège de véhicule (1) aéré de façon active d'un véhicule automobile, chaque siège de véhicule (1) présentant une âme de rembourrage (2),
◆ avec des canaux d'aération (4) s'étendant le long et sur le côté intérieur d'une surface du siège (3) et/ou du dossier et
◆ avec des cheminées d'aération (5) disposées essentiellement de manière transversale par rapport aux canaux d'aération (4), lesquelles traversent l'âme de rembourrage (2) sur l'ensemble de son épaisseur et s'étendent depuis les canaux d'aération (4) jusqu'à une paroi arrière (6) éloignée de la surface du siège (3) et/ou du dossier,
◆ avec au moins un ventilateur (8),
**caractérisé en ce que**, pour la réalisation d'un siège de véhicule (1) aéré de façon active, au moins une cheminée d'aération (5) est fermée.

12. Siège de véhicule (1) aéré de façon active selon la revendication 11, **caractérisé par** au moins l'une quelconque des caractéristiques caractérisantes des revendications 1 à 10.
